# FASCICULE DE BREVET EUROPEEN

(11) **EP 1 533 226 B1**
(45) Date de publication et mention de la délivrance du brevet: **02.03.2011**
(21) Numéro de dépôt: 04105975.9
(22) Date de dépôt: 22.11.2004
(51) Int. Cl.: B64C 1/10, B64D 11/00

(54) **Cloison pour aéronef destinée à séparer une partie cargo d'un cockpit ou d'un compartiment passager**
Schottwand für Flugzeug, die einen Frachtraum von einem Cockpit oder von einem Passagierraum trennt
Bulkhead for aircraft to separate a cargo area from a cockpit or a passenger compartment

(30) Priorité: 24.11.2003 FR 0350893
(43) Date de publication de la demande: 25.05.2005
(73) Titulaire: AIRBUS OPERATIONS, 31060 Toulouse (FR)
(72) Inventeur: Bouchet, Eric, F-31840 Aussonne (FR); Mathieu, Benjamin, F-31500 Toulouse (FR); Juillen, Lionel, F-31300 Toulouse (FR); Vinches, Frédéric, F-31330 Larra (FR)
(74) Mandataire: Poulin, Gérard

(56) Documents cités:
- GB-A- 824 823
- RU-C- 2 144 469
- US-A- 5 085 382
- US-A1- 2001 015 043

## Description

### DOMAINE TECHNIQUE

La présente invention se rapporte de façon générale au domaine des dispositifs de séparation d'une partie cargo et d'un cockpit ou d'un compartiment passager d'un aéronef, celui-ci étant utilisé pour transporter du fret. Plus particulièrement, l'invention se rapporte à une cloison destinée à être interposée entre une partie cargo et un cockpit ou un compartiment passager d'un aéronef, et comportant une structure centrale alvéolaire en contact avec une première paroi extérieure ainsi qu'une seconde paroi extérieure de cette cloison.

### ETAT DE LA TECHNIQUE ANTERIEURE

Dans un aéronef conçu et utilisé pour transporter du fret dans une partie cargo, il est généralement prévu un dispositif de séparation entre cette partie cargo et le cockpit de l'aéronef lorsque ce dernier est entièrement utilisé comme cargo, ou bien un dispositif de séparation entre cette même partie cargo et un compartiment passager lorsque l'aéronef concerné est à usage mixte, à savoir destiné à transporter à la fois du fret et des passagers.

De façon connue, le dispositif de séparation a pour but de protéger les passagers, ou les membres de l'équipage suivant la configuration de l'aéronef concerné, en étant conçu de manière à pouvoir assurer l'arrêt de la charge transportée lorsque celle-ci est soumise à une accélération inférieure ou égale à une accélération maximale prévue dans le domaine de vol de ce même aéronef.

Dans l'art antérieur, plusieurs solutions ont déjà été proposées pour réaliser un tel dispositif de séparation, voir par example le document US 5085382.

En effet, une première solution a tout d'abord consisté à concevoir un filet pour retenir le fret afin qu'il ne pénètre pas dans le cockpit ou dans le compartiment passager lors d'une accélération de cette charge transportée, comme cela est notamment décrit dans le document US-A-6 244 803.

Cependant, cette solution présente un inconvénient majeur, en ce sens que le filet peut se déformer de façon sensible sous l'effet des efforts appliqués par la charge transportée retenue par ce filet, lors d'une accélération de cette charge. A titre indicatif, cette déformation peut atteindre plusieurs dizaines de centimètres lorsque l'aéronef est un gros porteur transportant des charges importantes. Ainsi, il est clair que la partie du cockpit ou du compartiment passager, dans laquelle le filet peut se déformer suite aux efforts transmis par la charge transportée en appui, ne peut naturellement pas être utilisée de façon utile. Par conséquent, l'utilisation d'un tel filet se traduit directement par un encombrement non-optimisé du cockpit ou du compartiment passager de l'aéronef.

Pour faire face à ce problème, il a été proposé une autre solution consistant à remplacer le filet par une cloison rigide à faible déformation, du type plaque métallique d'épaisseur relativement élevée. Néanmoins, si l'emploi de cette cloison permet avantageusement d'engendrer une diminution de l'encombrement directement relatif à l'utilisation du dispositif de séparation, elle augmente de façon conséquente la masse de ce dernier par rapport à la solution initiale du filet. De plus, il est bien entendu précisé que plus la charge transportée est importante, plus la masse de la cloison doit également être importante, ce qui rend donc cette solution que très peu satisfaisante.

Par ailleurs, afin de diminuer la masse du dispositif de séparation, notamment dans le but évident de pouvoir augmenter la charge transportée, certaines cloisons ont été équipées d'une structure alvéolaire, par exemple en agençant celle-ci entre deux parois extérieures de la cloison.

Cependant, principalement lorsque l'aéronef concerné est un gros porteur et que le fret transporté dispose d'une masse importante, la masse de la cloison munie d'une structure alvéolaire reste toujours relativement conséquente, en raison de la résistance mécanique que celle-ci doit présenter afin de protéger les membres d'équipages situés dans le cockpit, ou les passagers présents à l'intérieur de leur compartiment.

### EXPOSÉ DE L'INVENTION

L'invention a donc pour but de proposer une cloison pour aéronef destinée à séparer une partie cargo d'un cockpit ou d'un compartiment passager de cet aéronef, cette cloison remédiant au moins partiellement aux inconvénients mentionnés ci-dessus relatifs aux réalisations de l'art antérieur.

Le but de l'invention est également de présenter un aéronef comportant au moins une telle cloison.

Pour ce faire, l'invention a tout d'abord pour objet une cloison pour aéronef destinée à séparer une partie cargo d'un cockpit ou d'un compartiment passager de cet aéronef, cette cloison comportant une structure centrale alvéolaire en contact avec une première paroi extérieure ainsi qu'une seconde paroi extérieure de la cloison. Selon l'invention, la cloison comporte en outre une pluralité d'éléments raidisseurs rapportés sur au moins l'une des première et seconde parois extérieures.

De façon avantageuse, l'adjonction des éléments raidisseurs sur la/les parois extérieures de la cloison selon l'invention permet à celle-ci de présenter une résistance mécanique globale accrue par rapport à celle procurée par une simple cloison de l'art antérieur, disposant d'une structure alvéolaire et de parois extérieures identiques ou similaires.

Par conséquent, cette caractéristique avantageuse relative à l'invention peut notamment être exploitée pour concevoir une cloison présentant une masse inférieure à celle d'une simple cloison de l'art antérieur, tout en étant capable de protéger les occupants de l'aéronef d'une même charge transportée. En effet, pour une même résistance mécanique aux efforts transmis par le fret en appui et en accélération, la solution proposée par l'invention utilisant des éléments raidisseurs autorise l'emploi d'une structure centrale alvéolaire allégée par des alvéoles disposant de plus grandes dimensions, et définies par des éléments de cloison de moindres épaisseurs.

Ceci s'explique bien entendu par le fait que la masse des éléments raidisseurs adjoints est largement inférieure à la masse de matière économisée en raison de l'augmentation de la taille des alvéoles ainsi que suite à la diminution de l'épaisseur des éléments de cloison, et éventuellement suite à la diminution de l'épaisseur des parois extérieures.

A cet égard, il est noté que les divers paramètres géométriques de la cloison selon l'invention, tels que les dimensions et l'emplacement des éléments raidisseurs ou encore la taille des alvéoles, sont déterminés de manière à obtenir une cloison suffisamment résistante pour supporter la charge transportée maximale, soumise à une accélération au moins égale à l'accélération maximale qu'elle peut subir dans le domaine du vol défini pour l'aéronef concerné.

A titre d'exemple illustratif, en connaissant les efforts maximaux à supporter ainsi que les dimensions de la cloison, les différentes caractéristiques de celle-ci peuvent être déterminées de façon analytique, par calculs successifs en utilisant par exemple la méthode des éléments finis, ou encore par une méthode d'optimisation topologique.

En outre, la cloison selon la présente invention présente l'avantage d'offrir des déformations extrêmement faibles similaires à celles rencontrées dans l'art antérieur avec une cloison classique à structure alvéolaire, ces déformations étant par ailleurs largement inférieures à celles relatives à la solution de filet. Par conséquent, l'encombrement du cockpit de l'aéronef ou du compartiment passager de ce dernier peut être sensiblement optimisé.

De préférence, les première et seconde parois extérieures prennent chacune la forme d'une tôle plane, et chaque élément raidisseur prend la forme d'une lame montée fixement sur l'une de ces première et seconde parois extérieures.

Par ailleurs, on peut prévoir que chaque élément raidisseur s'étend sensiblement dans un sens de la hauteur de la cloison, en épousant l'une des première et seconde parois extérieures.

Toujours de façon préférentielle, chaque élément raidisseur est monté fixement sur une surface interne de l'une des première et seconde parois extérieures de la cloison.

Préférentiellement, la structure centrale alvéolaire de la cloison est réalisée à l'aide d'éléments de cloison prenant chacun la forme d'une tôle, ces éléments de cloison étant disposés sensiblement parallèlement et perpendiculairement les uns aux autres.

Dans le but d'offrir une meilleure résistance au flambage et de réduire encore davantage l'épaisseur des éléments de cloison ainsi que la masse totale de cette cloison, il peut être prévu qu'au moins un élément raidisseur secondaire est rapporté sur au moins l'un de ces éléments de cloison.

Enfin, la cloison, et préférentiellement la totalité de ses éléments constitutifs, est réalisée en aluminium ou dans l'un de ses alliages.

En outre, l'invention a pour objet un aéronef comportant au moins une cloison séparant une partie cargo d'un cockpit ou d'un compartiment passager de cet aéronef, au moins une cloison séparant une partie cargo du cockpit ou d'un compartiment passager étant une cloison telle que celle présentée ci-dessus et également objet de la présente invention.

De préférence, au moins une cloison séparant une partie cargo du cockpit ou d'un compartiment passager est fixée au fuselage de cet aéronef uniquement par un bord supérieur et un bord inférieur de la cloison. Cette spécificité a pour avantage de réduire les efforts transmis au fuselage par les dispositifs de fixation utilisés.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique partielle de côté d'un aéronef, comprenant une cloison selon un mode de réalisation préféré de la présente invention, cette cloison séparant une partie cargo d'un compartiment passager ;
- la figure 2 représente une vue en perspective de la cloison représentée sur la figure 1 ;
- la figure 3 représente une vue schématique de face de la cloison représentée sur les figures 1 et 2 ;
- la figure 4 représente une vue partielle en perspective de la cloison de la figure 3, cette cloison étant vue depuis le plan IV-IV de la figure 3 ; et
- la figure 5 représente une vue partielle en perspective de la cloison de la figure 3, cette cloison étant vue depuis le plan V-V de la figure 3.

### EXPOSÉ DÉTAILLÉ DE MODES DE RÉALISATION PRÉFÉRÉS

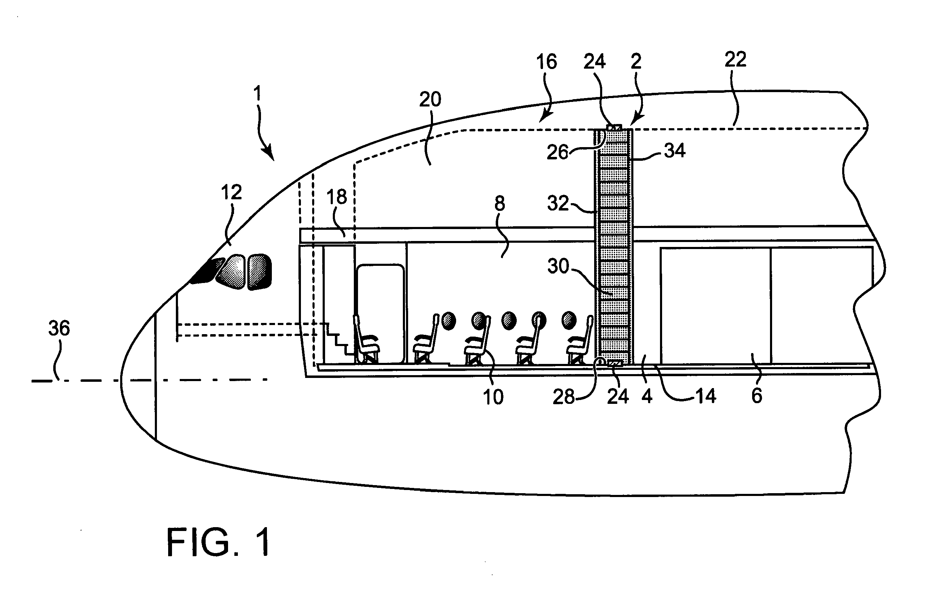

En référence à la figure 1, il est représenté un aéronef 1 à usage mixte, à savoir destiné à transporter à la fois du fret et des passagers, cet aéronef 1 étant équipé d'une cloison 2 selon un mode de réalisation préféré de la présente invention.

Comme indiqué précédemment, il est noté que l'aéronef 1 est également objet de la présente invention. Dans l'exemple préférentiel représenté sur cette figure 1, l'aéronef 1 est conçu de telle sorte que la cloison 2 est interposée entre une partie cargo 4 à l'intérieur de laquelle peut être placé le fret 6 également appelé charge transportée, et un compartiment passager 8 placé à l'avant de la partie cargo 4 et pourvu d'une pluralité de sièges 10. Bien entendu, dans un cas non représenté où l'aéronef 1 serait uniquement conçu pour transporter du fret 6, et ne présenterait donc plus de compartiment passager 8, la cloison 2 serait alors placée entre la partie cargo 4 et un cockpit 12 lui étant adjacent.

Comme on peut l'apercevoir sur la figure 1, la cloison 2 s'étend de façon verticale entre un plancher principal 14 et une partie supérieure d'un fuselage 16 de l'aéronef 1, en traversant un plancher d'étage 18 parallèle au plancher principal 14 et situé au-dessus de celui-ci. A ce titre, il est indiqué que dans la description, les termes « vertical » et « horizontal » signifient respectivement perpendiculaire et parallèle au plancher principal 14 de l'aéronef 1.

Naturellement, la cloison 2 pourrait ne s'étendre qu'entre le plancher principal 14 et le plancher d'étage 18 délimitant tous les deux la partie cargo 4 et le compartiment passager 8, ou encore qu'entre ce plancher d'étage 18 et la partie supérieure du fuselage 16, sans sortir du cadre de l'invention. En revanche, dans l'exemple préférentiel représenté sur la figure 1 où la cloison 2 s'étend au-delà du plancher d'étage 18, la portion de cette cloison 2 agencée entre ce plancher d'étage 18 et le fuselage 16 sépare deux enceintes 20 et 22 qui pourraient être utilisées pour stocker le fret 6, au même titre que la partie cargo 4 précédemment décrite. A cet égard, il est noté que l'on pourrait également prévoir deux cloisons 2 distinctes respectivement destinées à équiper chacun des deux niveaux séparés par le plancher d'étage 18. Dans un tel cas, les deux cloisons 2 ne seraient bien entendu pas nécessairement superposées selon la hauteur.

Dans le but de solidariser la cloison 2 au reste de la structure de l'aéronef 1, il est prévu des dispositifs de fixation 24 agencés entre cette cloison 2, et notamment le fuselage 16. Les dispositifs 24 peuvent par exemple comprendre des butées mécaniques montées à l'aide de boulons sur des rails perpendiculaires à la cloison 2 et solidarisés sur celle-ci. Ces butées sont alors de préférence destinées à reposer contre le fuselage 16 ou contre le plancher principal 14, et sont assemblées à l'un de ces éléments 14,16 également à l'aide de boulons.

Ainsi, afin de réduire les efforts transmis à ce fuselage 16 par les dispositifs de fixation 24, il peut effectivement être prévu que la cloison 2 soit uniquement fixée au niveau de son bord supérieur 26 à la partie supérieure du fuselage 16, et au niveau de son bord inférieur 28 au plancher principal 14.

Toujours en référence à la figure 1, la cloison 2 comporte une structure centrale alvéolaire 30 en contact d'une part avec une première paroi extérieure de cloison 32 délimitant le compartiment passager 8, et d'autre part avec une seconde paroi extérieure de cloison 34 délimitant la partie cargo 4 de l'aéronef 1.

A cet égard, il est indiqué que les deux parois extérieures 32 et 34 ainsi que la structure centrale alvéolaire 30 sont agencées verticalement, disposées de façon superposée dans une direction longitudinale de l'aéronef 1 représentée schématiquement par l'axe 36, et prennent chacune la forme d'une couche plane perpendiculaire à cette même direction longitudinale 36 de l'aéronef 1.

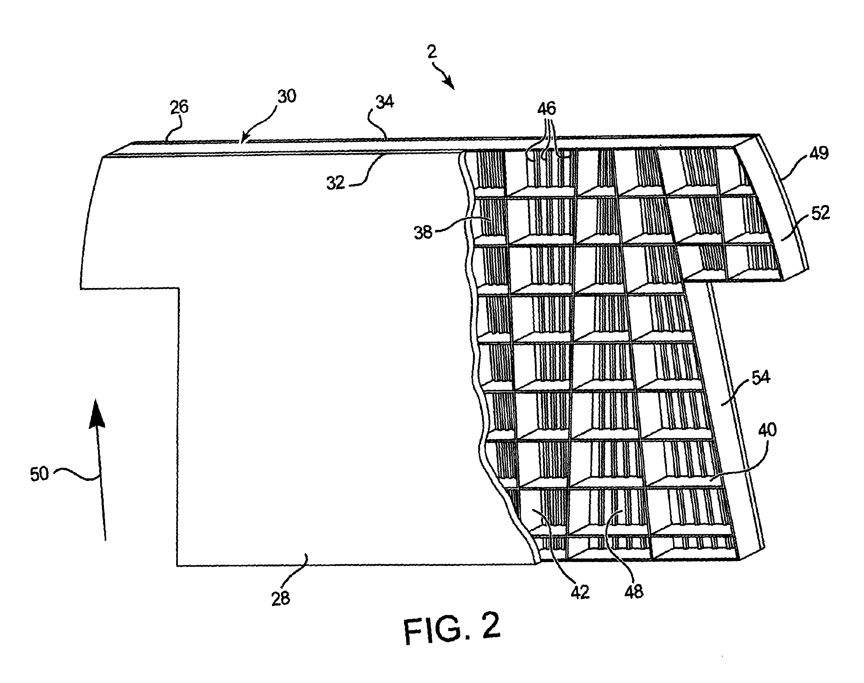

La particularité de cette cloison 2 réside dans le fait qu'elle comporte en outre une pluralité d'éléments raidisseurs (non représentés sur la figure 1), rapportés sur au moins l'une des première et seconde parois extérieures 32 et 34. Cependant, dans le mode de réalisation préféré de la présente invention représenté plus en détails sur la figure 2, les éléments raidisseurs ont uniquement été prévus sur la paroi extérieure 34 de cette cloison 2, à savoir sur la paroi arrière délimitant la partie cargo 4. Naturellement, ces éléments raidisseurs, destinés à augmenter la résistance mécanique globale de la cloison 2 afin que celle-ci puisse résister aux efforts transmis par le fret 6 en appui et soumis à une accélération, pourraient également être rapportés sur la paroi extérieure 32 de la cloison 2, à savoir sur la paroi avant délimitant le compartiment passager 8, sans sortir du cadre de l'invention.

A présent en référence à la figure 2, on peut voir que les parois extérieures 32 et 34 prennent chacune préférentiellement la forme d'une tôle plane, par exemple réalisée en aluminium ou dans l'un de ses alliages. Néanmoins, ces parois 32 et 34 pourraient être réalisées dans tout autre matériau rigide, sans sortir du cadre de l'invention. Naturellement, les contours de ces parois extérieures 32 et 34 sont définis de manière à épouser correctement notamment le fuselage 16 et le plancher principal 14 de l'aéronef 1. A cet égard, on peut voir que les parois extérieures 32,34 et la structure centrale alvéolaire 30 présentent chacune une portion inférieure sensiblement rectangulaire destinée à délimiter la partie cargo 4 du compartiment passager 8, ainsi qu'une portion supérieure de longueur plus importante, prenant sensiblement la forme d'un tronçon de disque afin de séparer les deux enceintes supérieures 20 et 22. A titre indicatif, il est précisé que la portion inférieure de la cloison 2 est rétrécie au niveau de ses deux côtés dans le but de pouvoir y monter des portes (non représentées) autorisant la communication entre la partie cargo 4 et le compartiment passager 8 de l'aéronef 1.

D'autre part, toujours en référence à la figure 2, on peut voir que la structure centrale alvéolaire 30 définit une pluralité d'alvéoles 38, à l'aide d'éléments de cloison 40 et 42 disposés sensiblement parallèlement et perpendiculairement les uns par rapport aux autres. En effet, dans ce mode de réalisation préféré de la présente invention, il est prévu des éléments de cloison horizontaux 40 qui s'étendent de préférence sur toute la longueur de la cloison 2 et perpendiculairement aux parois extérieures 32 et 34, ainsi que des éléments de cloison verticaux 42 qui s'étendent chacun entre deux éléments de cloison horizontaux 40 directement consécutifs, et également perpendiculairement aux parois extérieures 32 et 34. Ainsi, les alvéoles 38 formées à l'aide de ces éléments de cloison 40 et 42 peuvent être de forme sensiblement parallélépipédique, et présenter deux ouvertures (non référencées) respectivement en regard des parois extérieures 32 et 34.

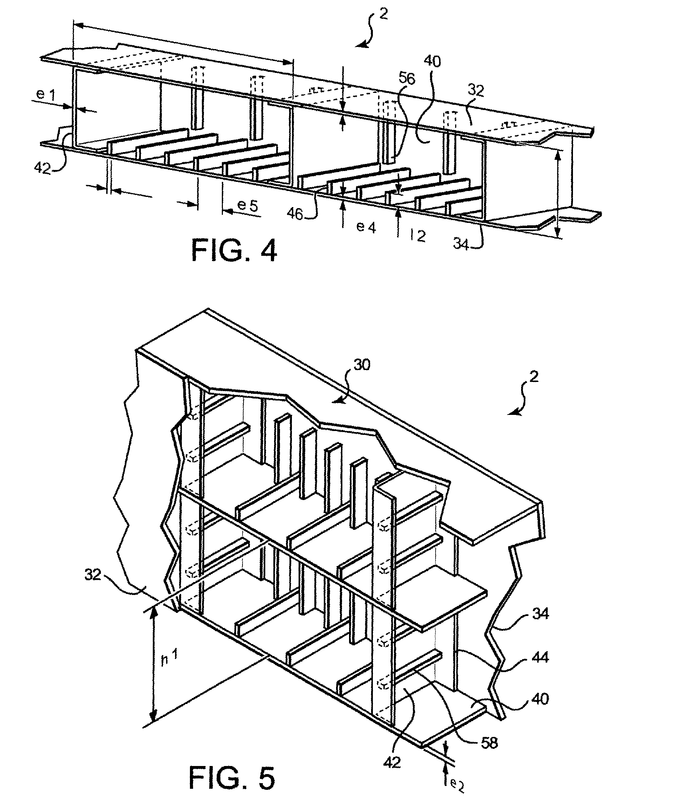

Les éléments de cloison 40 et 42 prennent chacun la forme d'un tôle par exemple réalisée en aluminium ou dans l'un de ses alliages. Néanmoins, ces éléments 40 et 42 pourraient être réalisés dans tout autre matériau rigide, sans sortir du cadre de l'invention. En ce qui concerne les éléments de cloison horizontaux 40, chacun d'entre-eux peut simplement être constitué d'une tôle plane, sensiblement rectangulaire. En revanche, chaque élément de cloison vertical 42 est de préférence constitué d'une tôle en forme de U aplati, dont la base plane de forme sensiblement rectangulaire permet de partiellement délimiter les alvéoles 38. De plus, dans un tel cas, les deux branches de longueur réduite du U permettent alors la fixation de l'élément 42 concerné, respectivement sur les parois extérieures 32 et 34 comme cela est clairement visible sur la figure 4. Bien entendu, la forme de U pourrait également être obtenue à l'aide d'un assemblage de plusieurs tôles, sans sortir du cadre de l'invention.

Avec un tel agencement, on peut s'apercevoir sur la figure 5 que les éléments de cloison horizontaux 40 peuvent alors être simplement maintenus par les branches 44 du U formé par chaque élément de cloison vertical 42, sans qu'ils aient besoin d'être assemblés fixement à une autre partie de la cloison 2. Néanmoins, il pourrait également être prévu des liaisons fixes entre les éléments de cloison horizontaux 40 et les éléments de cloison verticaux 42, sans sortir du cadre de l'invention. A cet égard, il est indiqué que les branches 44 des éléments de cloison verticaux 42 sont de préférence fixés par soudage aux parois extérieures 32 et 34.

A nouveau en référence à la figure 2, on peut voir que la cloison 2 comporte des éléments raidisseurs 46, montés fixement sur une surface interne 48 de la paroi extérieure 34, par exemple par soudage ou encore par rivetage. En d'autres termes, les éléments raidisseurs 46 épousent la surface interne 48, correspondant à la surface de la paroi extérieure 34 en regard et en contact avec la structure centrale alvéolaire 30, et opposée à une surface externe 49 de cette même paroi 34 sur laquelle le fret 6 est susceptible de prendre appui lorsqu'il se détache accidentellement de son emplacement de stockage.

De préférence, chaque élément raidisseur 46 prend la forme d'une lame constituée par une tôle plane sensiblement rectangulaire, par exemple réalisée en aluminium ou dans l'un de ses alliages. Néanmoins, ces éléments raidisseurs 46 pourraient être réalisés dans tout autre matériau rigide, sans sortir du cadre de l'invention. Toujours de manière préférée, les lames 46 s'étendent toutes dans un sens de la hauteur de la cloison 2 représenté par la flèche 50. Ainsi, ces lames 46 disposées verticalement sont agencées de façon à définir des lignes droites entre le bord inférieur 28 et le bord supérieur 26, ces lignes droites et verticales étant sensiblement parallèles entre-elles et chacune uniquement interrompue par les éléments de cloison horizontaux 40, comme cela est visible sur la figure 2. A titre d'exemple illustratif, on peut prévoir qu'entre deux et dix éléments raidisseurs 46 soient fixés entre deux éléments de cloison verticaux 42 directement consécutifs, et que chacun de ces éléments raidisseurs forme partiellement une ligne droite de raidisseurs s'étendant entre le bord inférieur 28 et le bord supérieur 26 de la cloison 2. Naturellement, la disposition et le nombre d'éléments raidisseurs 46 peuvent être facilement adaptés aux besoins rencontrés, de manière à obtenir une cloison 2 suffisamment résistante mécaniquement pour supporter la charge transportée maximale, soumise à une accélération au moins égale à l'accélération maximale qu'elle peut subir dans le domaine du vol défini pour l'aéronef concerné.

Comme cela est le mieux visible sur la figure 4, les éléments raidisseurs 46 en forme de lames réalisées à l'aide de tôles sont montés fixement sur la surface interne 48, de façon à ce que ces tôles soient perpendiculaires à la paroi extérieure 34. En d'autres termes, les éléments raidisseurs 46 sont en contact avec la surface interne 48 au niveau de leur chant longitudinal.

En outre, il est indiqué que la cloison 2 peut éventuellement être munie de tôles annexes 52,54 assemblées fixement au niveau des contours de cette cloison 2, notamment dans le but de fermer les alvéoles 38 situées aux extrémités de cette même cloison.

Par ailleurs, afin de renforcer encore davantage la résistance mécanique globale de la cloison 2, et donc de pouvoir réduire sa masse totale, il est possible de prévoir des éléments raidisseurs secondaires 56,58 respectivement rapportés sur les éléments de cloison horizontaux 40 et verticaux 42, comme on peut le voir sur les figures 4 et 5.

Ces éléments raidisseurs secondaires 56 et 58 peuvent être similaires aux éléments raidisseurs 46 décrits ci-dessus, et sont de préférence positionnés perpendiculairement aux parois extérieures 32 et 34, et donc horizontalement sur les éléments de cloison 40 et 42 afin d'éviter le flambage de ces derniers suite aux efforts appliqués par le fret 6 en appui sur la paroi extérieure 34.

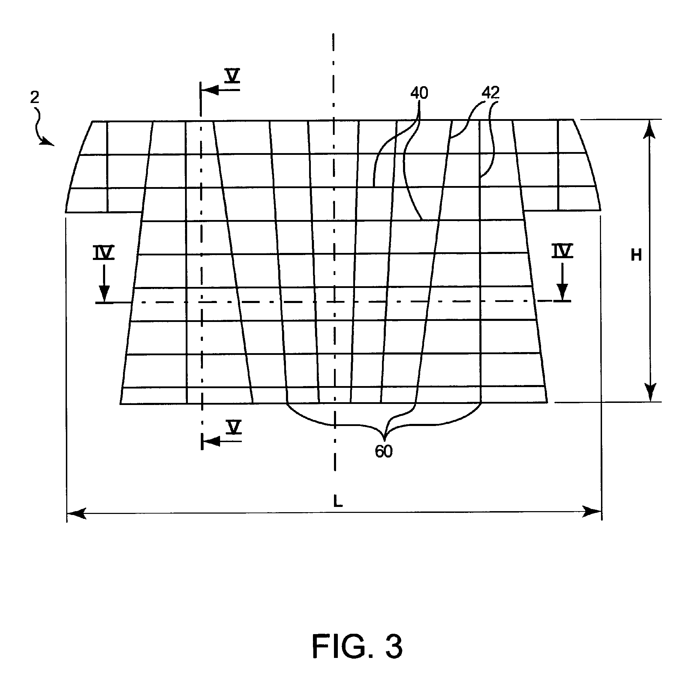

En référence à présent à la figure 3, on peut voir que les éléments de cloison horizontaux 40 sont effectivement positionnés horizontalement et parallèlement les uns aux autres. En revanche, pour des raisons de tenue mécanique de la cloison 2, il peut être préférable de prévoir que les éléments de cloison 42, dits « verticaux », forment en fait des parois 60 entre les bords 26 et 28, dont certaines sont légèrement inclinées par rapport à la verticale, dans un plan fictif défini par la cloison 2. Néanmoins, il est précisé que la notion de verticalité associée aux éléments de cloison 42 est justifiée en ce sens que l'inclinaison des parois 60 obtenues ne dépasse généralement pas quelques degrés.

En référence aux cotes indiquées sur les figures 3, 4 et 5, il est donné un exemple préféré de réalisation de la cloison 2.
- Hauteur « H » de la cloison 2 : 2578 mm
- Longueur « L » de la cloison 2 : 4900 mm
- Epaisseur « E » de la cloison 2 : 356 mm
- Largeur « l1 » des alvéoles 38 : 511 mm
- Epaisseur « e1 » des éléments de cloison verticaux 42 : 5,7 mm
- Epaisseur « e2 » des éléments de cloison horizontaux 40 : 1,5 mm
- Epaisseur « e3 » de la paroi extérieure 32 : 3,7 mm
- Epaisseur « e4 » de la paroi extérieure 34 : 2,2 mm
- Hauteur « h1 » des alvéoles 38 : 295 mm
- Espacement « e5 » entre les éléments raidisseurs 46 : 51 mm
- Epaisseur « e6 » des éléments raidisseurs 46 : 3,3 mm
- Largeur « l2 » des éléments raidisseurs 46 : 23 mm
- Nombre d'éléments raidisseurs 46 dans chaque alvéole 38 : environ 7 (seulement une partie d'entre-eux étant représentés sur la figure 4)
- Matériau utilisé pour les parois extérieures 32 et 34, les éléments de cloison 40 et 42, les éléments raidisseurs 46 et les éléments raidisseurs secondaires 56 et 58 : Aluminium 7075
- Masse surfacique de la cloison 2 : 28 kg/m²
- Résistance mécanique globale de la cloison 2 : 0,7 MPa

Bien entendu, diverses modifications peuvent être apportées par l'homme du métier à l'aéronef 1 et à la cloison 2 qui viennent d'être décrits, uniquement à titre d'exemples non limitatifs.

## Revendications

1. Cloison (2) pour aéronef (1) destinée à séparer une partie cargo (4) d'un cockpit (12) ou d'un compartiment passager (8) de cet aéronef, ladite cloison (2) comportant une structure centrale alvéolaire (30) en contact avec une première paroi extérieure (32) ainsi qu'une seconde paroi extérieure (34) de ladite cloison, ladite structure centrale alvéolaire (30) étant réalisée à l'aide d'éléments de cloison (40,42) disposés sensiblement parallèlement et perpendiculairement les uns aux autres et prenant chacun la forme d'une tôle, ces éléments de cloison (40,42) formant conjointement des alvéoles (38) présentant chacune deux ouvertures respectivement en regard desdites deux parois extérieures (32,34),
**caractérisée en ce que** ladite cloison (2) comporte en outre une pluralité d'éléments raidisseurs (46) rapportés sur au moins l'une desdites première et seconde parois extérieures (32,34).

2. Cloison (2) pour aéronef (1) selon la revendication 1, **caractérisée en ce que** lesdites première et seconde parois extérieures (32,34) prennent chacune la forme d'une tôle plane.

3. Cloison (2) pour aéronef (1) selon la revendication 1 ou la revendication 2, **caractérisée en ce que** chaque élément raidisseur (46) prend la forme d'une lame montée fixement sur l'une desdites première et seconde parois extérieures (32,34).

4. Cloison (2) pour aéronef (1) selon l'une quelconque des revendications précédentes, **caractérisée en ce que** chaque élément raidisseur (46) s'étend sensiblement dans un sens de la hauteur (50) de ladite cloison, en épousant l'une desdites première et seconde parois extérieures (32,34).

5. Cloison (2) pour aéronef (1) selon l'une quelconque des revendications précédentes, **caractérisée en ce que** chaque élément raidisseur (46) est monté fixement sur une surface interne (48) de l'une desdites première et seconde parois extérieures (32,34) de ladite cloison (2).

6. Cloison (2) pour aéronef (1) selon l'une quelconque des revendications précédentes, **caractérisée en ce qu'**elle comporte en outre au moins un élément raidisseur secondaire (56,58) rapporté sur au moins l'un desdits éléments de cloison (40,42).

7. Cloison (2) pour aéronef (1) selon l'une quelconque des revendications précédentes, **caractérisée en ce qu'**elle est réalisée en aluminium ou dans l'un de ses alliages.

8. Aéronef (1) comportant au moins une cloison (2) séparant une partie cargo (4) d'un cockpit (12) ou d'un compartiment passager (8) de cet aéronef, **caractérisé en ce qu'**au moins une cloison (2) séparant une partie cargo (4) du cockpit (12) ou d'un compartiment passager (8) est une cloison selon l'une quelconque des revendications précédentes.

9. Aéronef (1) selon la revendication 8, **caractérisé en ce qu'**au moins une cloison (2) séparant une partie cargo (4) du cockpit (12) ou d'un compartiment passager (8) est fixée au fuselage (16) de cet aéronef (1) uniquement par un bord supérieur (26) et un bord inférieur (28) de ladite cloison (2).

## Claims

1. A partition (2) for an aircraft (1) designed to separate a cargo part (4) from a cockpit (12) or a passenger compartment (8) of this aircraft, this partition (2) comprising a central cellular structure (30) in contact with a first external wall (32) and a second external wall (34) of the partition, said central cellular structure (30) being made using partition elements (40, 42) arranged substantially parallel and perpendicular to each other and each assuming the form of a sheet, said partition elements (40, 42) jointly forming cells (38) each having two openings opposite said two external walls (32, 34), respectively,
**characterized in that** said partition (2) also includes several stiffener elements (46) added onto at least either the first or second external wall (32, 34).

2. The partition (2) for an aircraft (1) according to claim 1, **characterized in that** said first and second outer walls (32, 34) each assume the form of a planar sheet.

3. The partition (2) for an aircraft (1) according to claim 1 or claim 2, **characterized in that** each stiffener element (46) assumes the form of a strip installed fixed on either the first or second external walls (32, 34).

4. The partition (2) for an aircraft (1) according to any one of the preceding claims, **characterized in that** each stiffener element (46) extends approximately along the direction of the height (50) of the partition, matching either the first or second external wall (32, 34).

5. The partition (2) for an aircraft (1) according to any one of the preceding claims, **characterized in that** each stiffener element (46) is installed to be fixed on an internal surface (48) of either the first or second external walls (32, 34) of the partition (2).

6. The partition (2) for an aircraft (1) according to any one of the preceding claims, **characterized in that** it also includes at least one secondary stiffener element (56, 58) added onto at least one of these partition elements (40, 42).

7. The partition (2) for an aircraft (1) according to any one of the preceding claims, **characterized in that** it is made from aluminium or one of its alloys.

8. The aircraft (1) including at least one partition (2) separating a cargo part (4) from a cockpit (12) or a passenger compartment (8) of this aircraft, **characterized in that** at least one partition (2) separating a cargo part (4) from the cockpit (12) or a passenger compartment (8) is a partition according to any one of the preceding claims.

9. The aircraft (1) according to claim 8, **characterized in that** at least one partition (2) separating a cargo part (4) from the cockpit (12) or a passenger compartment (8) is fixed to the fuselage (16) of this aircraft (1) only by an upper edge (26) and a lower edge (28) of said partition (2).

## Patentansprüche

1. Schottwand (2) für ein Luftfahrzeug (1) zur Abtrennung eines Frachtraums (4) von einem Cockpit (12) oder einem Passagierraum (8) dieses Luftfahrzeugs, wobei die Schottwand (2) eine Waben-Zentralstruktur (30) in Kontakt mit einer ersten Außenwand (32) sowie einer zweiten Außenwand (34) der Schottwand aufweist, wobei die Waben-Zentralstruktur (30) mittels Schottwandelementen (40, 42) realisiert ist, die im wesentlichen parallel und senkrecht zueinander angeordnet sind und jeweils die Form eines Blechs aufweisen, wobei diese Schottwandelemente (40, 42) gemeinsam Wabe (38) bilden, von denen jede zwei Öffnungen, jeweils im Hinblick auf die zwei Außenwände (32, 34) zeigt,
**dadurch gekennzeichnet, dass** die Schottwand (2) ferner mehrere Versteifungselemente (46) aufweist, die an die erste und/oder die zweite Außenwand (32, 34) angefügt sind.

2. Schottwand (2) für ein Luftfahrzeug (1) nach Anspruch 1, **dadurch gekennzeichnet, dass** die erste und die zweite Außenwand (32, 34) jeweils die Form eines planen Blechs aufweisen.

3. Schottwand (2) für ein Luftfahrzeug (1) nach Anspruch 1 oder Anspruch 2, **dadurch gekennzeichnet, dass** jedes Versteifungselement (46) die Form einer Leiste aufweist, die fest an der ersten oder der zweiten Außenwand (32, 34) angebracht ist.

4. Schottwand (2) für ein Luftfahrzeug (1) nach einem der vorhergehenden Ansprüche, **dadurch gekennzeichnet, dass** sich jedes Versteifungselement (46) im wesentlichen in einer Richtung der Höhe (50) der Schottwand erstreckt, wobei es sich an die erste oder die zweite Außenwand (32, 34) anpasst.

5. Schottwand (2) für ein Luftfahrzeug (1) nach einem der vorhergehenden Ansprüche, **dadurch gekennzeichnet, dass** jedes Versteifungselement (46) fest an einer inneren Oberfläche (48) der ersten oder der zweiten Außenwand (32, 34) der Schottwand (2) angebracht ist.

6. Schottwand (2) für ein Luftfahrzeug (1) nach einem der Vorhergehenden Ansprüche, **dadurch gekennzeichnet, dass** sie ferner mindestens ein sekundäres Versteifungselement (56, 58) aufweist, das an mindestens eines der Schottwandelemente (40, 42) angefügt ist.

7. Schottland (2) für ein Luftfahrzeug (1) nach einem der vorhergehenden Ansprüche, **dadurch gekennzeichnet, dass** sie in Aluminium oder einer Legierung desselben ausgeführt ist.

8. Luftfahrzeug (1), das mindestens eine Schottwand (2) aufweist, die einen Frachtbereich (4) von einem Cockpit (12) oder einem Passagierraum (8) dieses Luftfahrzeugs abtrennt, **dadurch gekennzeichnet, dass** mindestens eine Schottwand (2), die einen Frachtraum (4) vom Cockpit (12) oder von einem Passagierraum (8) abtrennt, eine Schottwand nach einem der vorhergehenden Ansprüche ist.

9. Luftfahrzeug (1) nach Anspruch 8, **dadurch gekennzeichnet, dass** mindestens eine Schottwand (2), die einen Frachtraum (4) von einem Cockpit (12) oder von einem Passagierraum (8) abtrennt, am Rumpf (16) dieses Luftfahrzeugs (1) nur durch einen oberen Rand (26) und einen unteren Rand (28) der Schottwand (2) befestigt ist.
